# EUROPEAN PATENT APPLICATION

(11) **EP 1 410 946 A1**
(43) Date of publication of application: **21.04.2004**
(21) Application number: 02445133.8
(22) Date of filing: 15.10.2002
(51) Int. Cl.: B60N 3/10

(54) **Cupholder**

(71) Applicant: Ford Global Technologies, Inc., Dearborn, Michigan 48126 (US)
(72) Inventor: Dahl Thomas, 443 32 Lerum (SE); Kylén Martin, 414 64 Göteborg (SE)
(74) Representative: Andersson, Per Rune

(57) **Abstract**

The invention relates to a cupholder (8; 9; 8') comprising a first essentially cylindrical component (10) and a second essentially cylindrical component (11), said second component (11) having an outer diameter which is less than the inner diameter of said first component (10) and being shaped so as to accommodate and support a drinking glass, cup, bottle, can or similar receptacle (18). Said second component (11) is arranged so as to be telescopically displaceable in relation to said first component (10). By means of the invention, an improved cupholder in which an inner tubular component can be adjusted telescopically in relation to an outer tubular component is provided.

## Description

### TECHNICAL FIELD:

The present invention relates to a cupholder comprising a first essentially cylindrical component and a second essentially cylindrical component, said second component having an outer diameter which is less than the inner diameter of said first component and being shaped so as to accommodate and support a drinking glass, cup, bottle, can or similar receptacle.

### BACKGROUND ART:

In the field of motor vehicles, there has been a steady development of various types of interior fittings and equipment for the safety and comfort of the occupants of a vehicle.

For example, many of today's cars are fitted with a cupholder, i.e. a device for accommodating and holding a cup, drinking glass, a can for a soft drink or a similar receptacle for beverages. For example, such a cupholder can be arranged in a console box which is arranged between the two front seats of a car. The console box is normally covered by a pivotable lid, which means that by opening the lid, the cupholder and the cups placed in the cupholder can be accessed by the occupants in the front seat of the vehicle. This type of equipment is considered to be advantageous as regards the comfort of the occupants. When the lid is closed, the console box serves as an armrest for the occupants in the front seats.

Alternatively, a cupholder in a vehicle can be positioned in a centre console, i.e a so-called "tunnel console", which is positioned immediately behind the vehicle's gear shift lever, i.e. in an area between the gear shift lever and the console box. This option is obviously advantegeous in that cups which are placed in the cupholder are easily accessible for the driver and the front seat passenger. Also, with such a solution, the console box can be used for stowing other items such as coins and keys, instead of accommodating a cupholder.

However, a solution in which the cupholder is positioned in a centre console leads to a situation wherein a cup placed in the cupholder will be positioned relatively close to the gear shift lever. This may cause the driver to hit the cup by accident when the gear shift lever is operated. This can be annoying for the driver, and may also cause the contents of the cup to be spilt out.

The above-mentioned problem could in principle be solved by designing the cupholder with a relatively deep recess which would allow the cup to be placed in a relatively low position with reference to the surface of the console. In other words, the cup would then be recessed relatively deep down into the console. However, such a solution will lead to another problem due to the need for cupholders to be arranged so as to accommodate cups of varying size. If, for example, a relatively small cup is positioned in a relatively deep recess in a console, it would be quite difficult to reach and grip the cup in its recess.

Another problem with cupholders relates to the fact that, in some cases, it may be desirable to arrange a cupholder in another place than a centre console or a console box, as mentioned above. For example, in some cases, it may be suitable to place a cupholder on, or near, the vehicle's dashboard. However, with such a solution, a cup which is positioned in the cupholder may obstruct the view from the driver's position to various instruments or warning lights which may be positioned immediately behind the cupholder or a cup held in the cupholder. This is obviously a problem. In a similar manner, in the event that a cupholder is mounted close to a ventilation inlet for incoming air into the interior of the vehicle, there is a risk that the cup will disturb or diminish the flow of said incoming air through the inlet. The risk for such a situation is of course greater in case the cup being used is relatively large.

The patent document JP 11206544 teaches a cupholder which is intended to be used in a vehicle and which comprises an inner, tubular component and an outer, tubular component. The position of the outer tubular component can be vertically adjusted with respect to the inner tubular component, by screwing it in relation to said inner tubular component. To this end, a spiral-shaped screw groove is formed along the inner periphery of the outer tubular component. This screw groove cooperates with a spiral screw element on the outer periphery of the inner tubular component. Furthermore, the inner tubular component constitutes a cup receiver and is provided with a fixing foot which can be mounted on a support.

Although this previously known arrangement functions in a satisfactory manner, there is still a demand for further improvements in the field of cupholders.

### DISCLOSURE OF INVENTION:

An object of the present invention is to provide an improved cupholder for a vehicle, in particular a cupholder having a simple design.

In accordance with the invention, this object is accomplished by means of an arrangement as mentioned initially, which arrangement is characterized in that said second component is arranged so as to be telescopically displaceable in relation to said first component.

By means of the invention, certain advantages are provided. For example, a cup or similar receptacle can be placed in the cupholder according to the invention in a simple and convenient manner. Due to the fact that said second component is adapted so as to accommodate and support a cup, said cup can be placed in the second component and can then be positioned in a suitable vertical position by adjusting the second component telescopically in relation to the first component. This means for example that the cupholder can be positioned in a relatively low position (with respect to a console in which it is mounted) or a relatively high position. In this manner, the cupholder according to the invention can be adapted for use with both small and large cups. Furthermore, the position of the second component can be adapted to the available space in the vehicle, which means that the cup can be positioned so that it does not interfere with the movements of the driver of the vehicle, for exemple during gear shifting.

Furthermore, when a cup is positioned in the second component, the vertical position of the cupholder can be set by simply turning the cup being placed in the holder component. This means that each cup can be positioned in an individual manner, so that a relatively big cup will not be in the way and also so that a relatively small cup will be possible to reach.

### BRIEF DESCRIPTION OF DRAWINGS:

In the following text, the invention will be described in detail with reference to the attached drawings. These drawings are used for illustration only and do not in any way limit the scope of the invention. In the drawings:
- Fig. 1: shows the interior of a car which is fitted with a cupholder according to the present invention;
- Fig. 2: shows a part of a console as indicated in Fig. 1, in which the cupholder according to the invention is shown in detail in a first position;
- Fig. 3: shows the cupholder according to Fig. 2, but in a second position;
- Fig. 4a: shows a side view of the cupholder having a cup positioned therein, in said second position;
- Fig. 4b: shows a side view of the cupholder having a cup positioned therein, in a mid-position; and
- Fig. 5: shows an alternative embodiment of the invention.

### PREFERRED EMBODIMENTS:

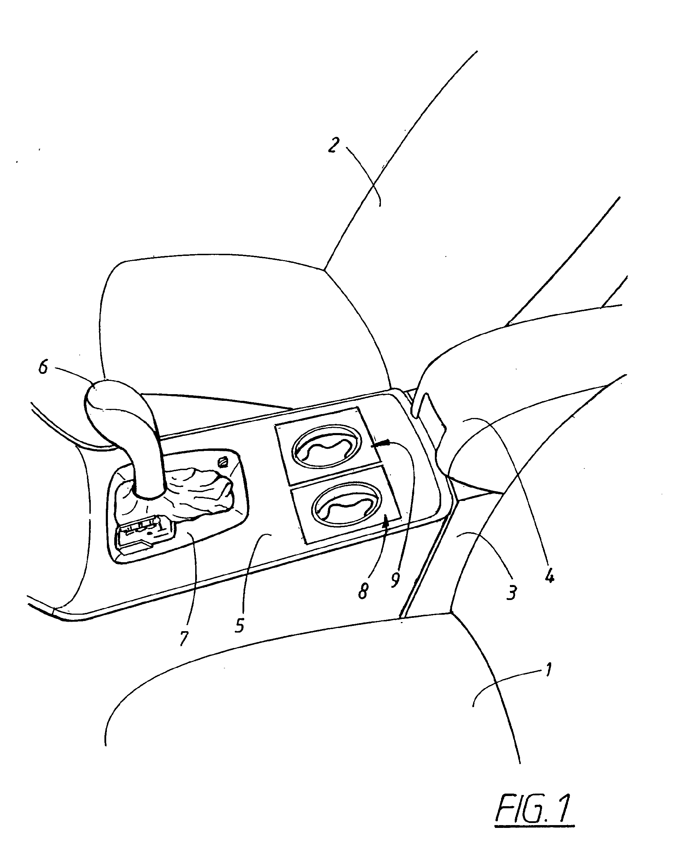

In the following, an embodiment of the present invention will be described in detail. With reference to Fig. 1, there is shown the interior of a car of conventional type. In a manner which is known per se, the car is provided with two front seats 1, 2, i.e. a driver's seat 1 and a front passenger seat 2. Between the two front seats 1, 2, a console box 3 is arranged. In a manner which is known per se, the console box 3 is suitably constituted by a container for small items such as for example coins and keys, and is covered by a lid 4. In a conventional manner, the lid 4 is pivotable about a pivoting axis (not shown) at its rear end, and can be opened so as to allow access to the container. When the lid 4 is closed, the container in the console box 3 cannot be accessed and the lid 4 can instead be used as an armrest.

Fig. 1 also shows a centre console 5 (also known as "tunnel console") which is situated adjacent to a gear shift lever 6. The gear shift lever 6 is mounted in a gear shift lever console 7 and is designed so as to allow shifting of the vehicle's transmission. The manner in which a gear shift lever is arranged in a suitable console in a car in order to allow shifting of the car's transmission is previously known, and for this reason it is not described in detail here.

Furthermore, Fig. 1 shows two cupholders 8, 9 which are positioned in the centre console 5. The cupholders 8, 9 are of the same type and are intended to be used by the driver and the passenger in the front passenger seat 2, respectively. The cupholders 8, 9 will be described in greater detail below, with reference to the appended drawings.

The invention is not limited to an arrangement in which two cupholders 8, 9 are used together as shown in Fig. 1, but may be implemented as one single cupholder or a number of cupholders which can be positioned at one or more suitable locations in a vehicle. This means that a cupholder according to the invention is not limited to a use in the centre console 5 of a vehicle, but can also be used in other locations, for example in a dashboard, in a console box (of the type shown in Fig. 1) or in any other position in which there is a desire to provide a cupholder for any of the occupants of the vehicle.

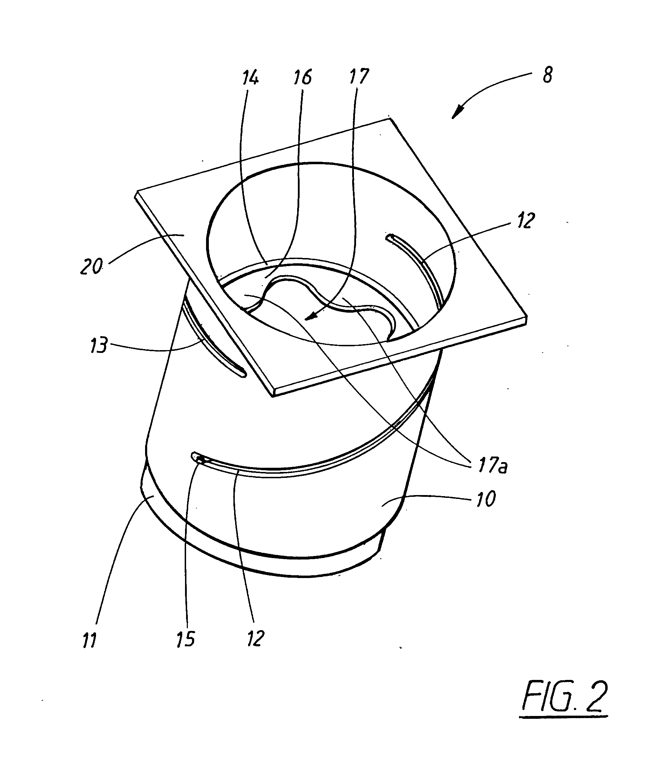

Due to the fact that both cupholders 8, 9 shown in Fig. 1 are of the same type, only one single cupholder 8 will be described in the following. With reference to Fig. 2, it can be noted that the invention relies on the principle that the cupholder 8 comprises an outer part 10 which is constituted by a first essentially cylindrical component, and an inner part 11 which is constituted by a second essentially cylindrical component. More precisely, the outer part 10 and the inner part 11 are preferably tubular. Furthermore, the inner part 11 has an outer diameter which is slightly less than the inner diameter of the outer part 10 and is positioned inside the outer part 10. Also, the inner part 11 has an inner diameter which exceeds the outer diameter of conventional cups, glasses, cans and similar receptacles.

Furthermore, the inner part 11 is arranged so as to be telescopically displaced in relation to the outer part 10. To be precise, the cupholder 8 is arranged so that the outer part 10 constitutes a stationary component which is suitably fixedly mounted in a console or a similar fitting in a vehicle, whereas the inner part 11 it adapted so as to be vertically positioned by screwing it in either direction inside the outer part 10 in order to adjust its position inside the outer part 10. To this end, the outer part 10 is formed with at least one, and preferably two generally spiral-shaped grooves 12, 13 (i.e. a first groove 12 and a second groove 13), each of which extends in a spiral-like fashion around the periphery of the outer part 10. Fig. 2 indicates the top portion and bottom portion of the first groove 12, but only the top portion of the second groove 13. In order to allow a telescopical movement of the inner part 11 in relation to the outer part 10, the inner part 11 is provided with two pins (of which only one pin 15 can be seen in Fig. 2) which cooperate with the two grooves 12, 13, respectively. In particular, the pin 15 as shown in Fig. 2 is arranged so that it extends in a generally radial direction out from the inner part 11 and into the first groove 12. The other pin (not shown in Fig. 2) is arranged in a similar manner in the second groove 13. This means that each pin 15 constitutes a guide element for controlling the telescopic displacement of the inner part 11 in relation to the outer part 10 during turning of the inner part 11.

Preferably, each groove 12, 13 extends approximately half a turn around the outer part 10, i.e. approximately 180° about the circumference of the outer part 10. This means that the inner part 11 can be turned approximately 180° with respect to the outer part 10 while at the same the inner part 11 is telescopically displaced. The rotation direction of the inner part 11 is defined by the direction of inclination of the grooves 12, 13. In the embodiment shown in Fig. 2, the inner part 11 is displaced upwards by turning the inner part 11 counter-clockwise. Consequently, the inner part 11 is displaced downwards by turning it clockwise.

In Fig. 2, the cupholder 8 according to the invention is shown in a condition in which the inner part 11 has assumed its lowest position. This is given by the fact that a top edge 14 of said inner part 11 is recessed relatively deep into the interior of the outer part 10. This position of the inner part 11 is furthermore defined by the fact that the pin 15 is located at the bottom of its corresponding groove 12. The pin which is positioned at the rear of the cupholder 8 (and which is not shown in Fig. 2) is positioned in a similar way at the bottom of its corresponding groove 13.

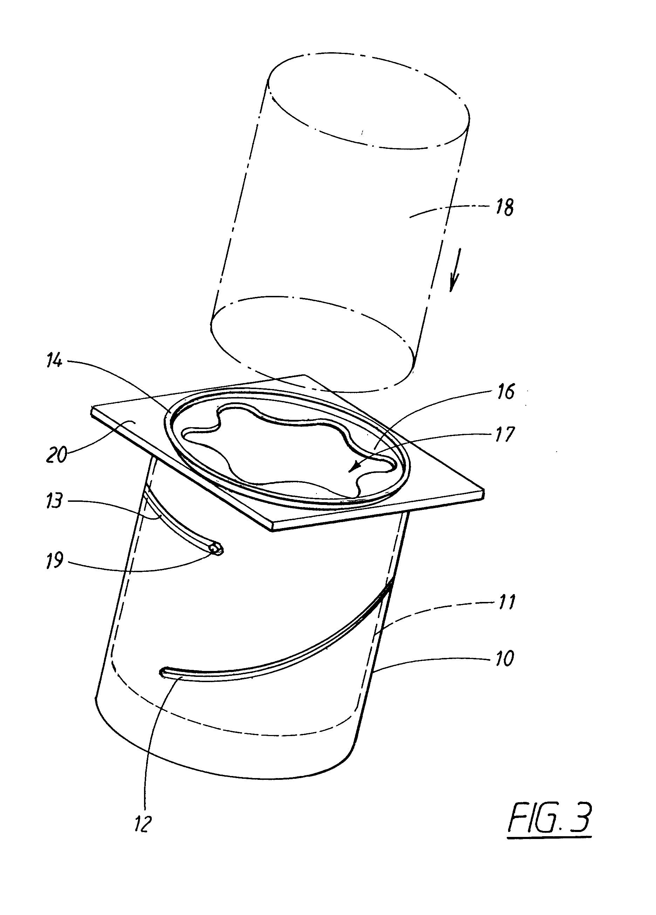

An important feature of the present invention is that a holder component 16 is provided on the inner part 11. This holder component 16 is preferably constituted by a generally flat and circular piece of flexible material which presents an opening 17 for allowing the bottom portion of a cup or a similar receptacle to be inserted so that it extends into the interior of the inner part 11. As indicated in Fig. 3, which is a perspective view of the cupholder 8 in a condition in which the inner part 11 (which is indicated by broken lines) has assumed its highest position, the opening 17 is generally star-shaped with slightly rounded edges 17a. In this manner, a cup, which is indicated by means of broken lines and reference numeral 18, can be pushed down into the opening 17, as indicated by means of arrows in Fig. 3. Due to the fact that the holder component 16 is made from a relatively flexible, but also relatively stiff, material, the cup 18 will be held steadily, primarily by means of the edges 17a in the holder component 16 after inserting it into the opening 17. In order to provide this support or holding function of the cupholder 8, the holder component 16 is made from a material which is sufficiently flexible to allow the cup 18 to be inserted, but sufficiently stiff to hold the cup 18 firmly.

Also, the holder component 16 is preferably made of a material which may withstand high temperatures, which is necessary in case a cup of hot coffee or tea is positioned in the cupholder 8.

A suitable material for the holder component 16 is so-called EDPM rubber, but the invention is not limited to this material only. In fact any material which has suitable properties as regards flexilibility, stability, temperature resistance etc. is suitable for the holder component 16. Also, an additional advantage is obtained if the holder component 16 is made from a material which presents a high friction force with respect to an inserted cup 18. The remaining parts of the cupholder 8 are preferably manufactured from a suitable plastic material.

As mentioned above, Fig. 3 shows the cupholder 8 according to the invention in its highest vertical position. This is defined by the manner in which the groove 13 and its corresponding pin 19 are in a position in which the pin 19 is situated in the highest possible position within the groove 13.

When the cup 18 is inserted in the opening 17 which is formed by the holder component 16, it is held firmly, but in a flexible manner. This means that if necessary, the inner part 11 can be telescopically displaced in relation to the outer part 10 by turning the inner part 11 in a screwing-like manner. In accordance with the embodiment shown in Figs. 2 and 3, this can be done by simply turning the cup 18 itself. By doing so, the force acting upon the cup 18 will be transmitted to the holder component 16 and further to the inner part 11. In this manner, the vertical position of the inner part 11 can be chosen, within the boundaries defined by the grooves 12, 13 and their corresponding pins 15, 19.

As shown in Figs. 2 and 3, a generally flat cover element 20 is preferably mounted to the upper end of the the outer part 10. The cover element 20 is preferably square or rectangular and presents an opening which is slightly larger than the outer diameter of the inner part 11. The entire cupholder 8 is preferably mounted in a recess of a suitable console in a vehicle, in a manner so that the cover element 20 is generally flush with the surface of the console. This type of mounting of the cupholder 8 is shown in Fig. 1.

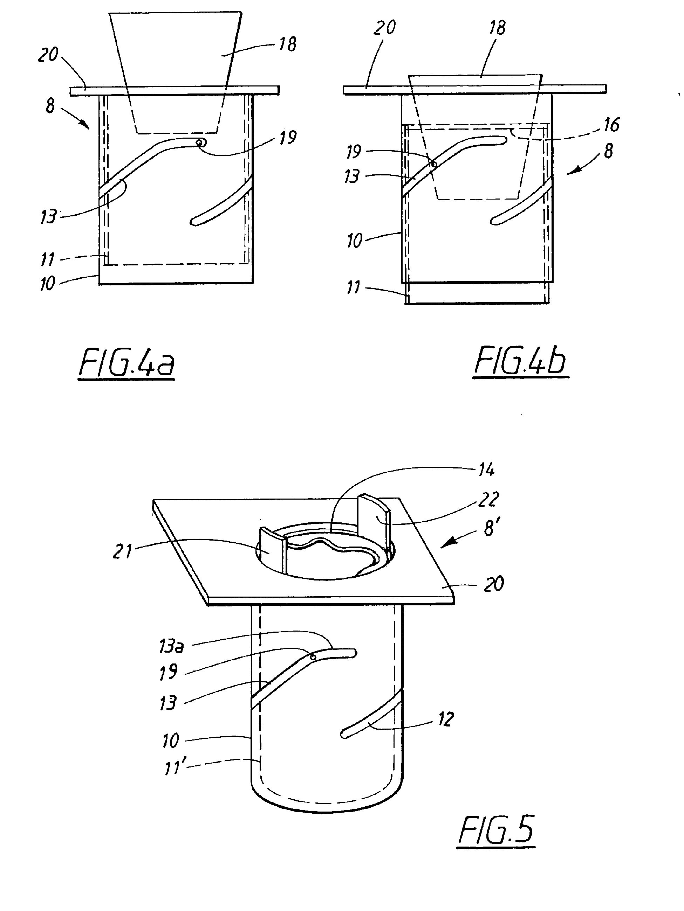

Figs. 4a and 4b are two slightly simplified side views of a cupholder 8 according to the invention, showing in particular the manner in which a cup 18 can be positioned inside said cupholder 8 according to two alternatives. According to Fig. 4a, the cupholder 8 has assumed a condition in which the inner part 11 is in its highest vertical position, which is defined by the pin 19 being in the top portion of its corresponding groove 13. This is the same position as shown in Fig. 3. According to Fig. 4a, the cup 18 is now inserted a certain distance into the inner part 11, i.e. a certain distance into the opening which is formed by the holder component (not visible in Fig. 4a).

In Fig. 4b, the inner part 11 has assumed a slightly more recessed condition in the outer part 10, more precisely a condition in which the inner part 11 is in a mid-position as defined by the pin 19 being in a position roughly halfway between its top position and its bottom position. Furthermore, in Fig. 4b, the cup 18 is shown as being inserted slightly deeper into the inner part 11 than in Fig. 4a, i.e. a relatively long distance into the opening formed by the holder component 16 (see Fig. 4b). Consequently, a person placing a cup 18 in the cupholder 8 may choose how deep into the holder component 16 the cup 18 is to be placed, and may also choose a suitable vertical position for the inner part 11 with respect to the outer part 10 by turning the inner part 11 as explained above.

In Fig. 5, an alternative embodiment of the invention is shown. The cupholder 8' as shown in Fig. 5 is of generally the same type as shown in Figs. 1-4 but is provided with an inner part 11' which is provided with a control element, preferably in the form of a pair of vertically protruding tabs 21, 22. The tabs 21, 22 are mounted on the top edge 14 of the inner part 11' and extend in an essentially vertical direction above the inner part 11. The purpose of the tabs 21, 22 is to facilitate turning of the inner part 11 in relation to the outer part 10. This is done by manually gripping the tabs 21, 22 and then turning the inner part 11 to its desired position with respect to the outer part 10.

As an alternative to the two tabs 21, 22 shown in Fig. 5, other types of control element can be used, for example in the form of one or more pins or levers, which can be used to operate the inner part 11 in order to allow it to be rotated.

Furthermore, as shown most clearly in Fig. 5 (and also Figs. 4a and 4b), the groove 13 of the outer part 10 can be designed so that its top portion 13a presents a relatively low degree of inclination, or no inclination at all. This is to ensure that the inner part 11 does not return to its lower position by itself. Although not shown in Fig. 5, the top portion of the groove 12 is formed in a similar manner. As an alternative, the top portions of the grooves can be shaped as a crest, in order to further hold the inner part 11 securely when it is positioned in its highest position. This means that the top portion of each groove 12, 13 has an inclination which is of opposite direction as compared with the remaining part of the grooves 12, 13.

With renewed reference to Fig. 1, the cupholder 8, and the similiar cupholder 9, are shown in their normal positions in the centre console 5. As shown, the cupholders 8, 9 are located close to the occupants of the front seats 1, 2 of the vehicle in question, and are easily accessible to the passengers in these seats 1, 2. Although not shown in Fig. 1, the centre consol 5 can be formed with some type of lid, which can be pivotable and which can be arranged so as to cover the cupholders 8, 9 when they are not used.

The invention is not limited to the embodiment described, but can be modified within the scope of the appended claims. For example, the dimensions of the outer part 10 and the inner part 11, as well as the position, length and inclination of the grooves 12, 13 may vary within the scope of the invention.

According to an embodiment which is suitable for most normal cups and glasses, the cupholder 8 according to the invention is designed so that the inner part 11 can be displaced approximately 60 mm in a generally vertical direction, but other dimensions may be chosen.

Furthermore, it should be noted that the holder component is not limited to the flexible element 16 described above. Alternatively, any type of flexible or resilient arrangement which is shaped with an opening for receiving and supporting a cup can be used within the scope of the invention. For example, a spring-biased clamp can be used for this purpose.

As an alternative to the solution described above with the grooves 12, 13 in the outer part 10 and the pins 15, 19 in the inner part 11, the invention can also be implemented with an inner part having grooves and an outer part having pins extending towards the grooves in the inner part.

Finally, the present invention is not limited to use in cars but is also suitable for other types of vehicles, such as trucks and buses, and also airplanes

## Claims

1. Cupholder (8; 9; 8') comprising a first essentially cylindrical component (10) and a second essentially cylindrical component (11), said second component (11) having an outer diameter which is less than the inner diameter of said first component (10) and being shaped so as to accommodate and support a drinking glass, cup, bottle, can or similar receptacle (18), **characterized in that** said second component (11) is arranged so as to be telescopically displaceable in relation to said first component (10).

2. Cupholder (8; 9; 8') according to claim 1, **characterized in that** said second component (11) being provided with a holder component (16) comprising a flexible component (16) being shaped with an opening (17) for allowing insertion of said receptacle (18) inside said second component (11), said flexible component (16) being adapted for supporting said receptacle (18).

3. Cupholder (8; 9; 8') according to claim 1 or 2, **characterized in that** said first component (10) comprises at least one generally spiral-shaped groove (12, 13) which cooperates with a corresponding protruding element (15, 19) on the outer periphery of said second component (11), for allowing the second component (11) to be displaced telescopically in a screwing-like manner.

4. Cupholder (8; 9; 8') according to claim 2 or 3, **characterized in that** said holder component (16) is constituted by a generally flat component being formed of a resilient material.

5. Cupholder (8; 9; 8') according to claim 4, **characterized in that** said holder component (16) is formed with an opening (17) which is generally star-shaped with rounded edges (17a), and dimensioned for receiving and supporting said receptacle (18) in a flexible manner.

6. Cupholder (8; 9; 8') according to any one of claims 3-5, **characterized in that** said groove (13) is formed with a top portion (13a) having essentially no inclination with reference to a horizontal direction, or an inclination having a direction which is the opposite as compared with that of the remaining part of the groove (13).

7. Cupholder (8') according to any one of the preceding claims, **characterized in that** said second component (11) is provided with a protruding control element (21, 22) which can be accessed for manually adjusting the position of the second component (11).

8. Vehicle comprising a cupholder (8; 9; 8') according to any of the preceding claims and being positioned in a console (5) thereof.
